# EUROPEAN PATENT APPLICATION

(11) **EP 3 141 832 A1**
(43) Date of publication of application: **15.03.2017**
(21) Application number: 15184995.7
(22) Date of filing: 14.09.2015
(51) Int. Cl.: F24F 11/02, F24F 13/30, F24F 13/14

(54) **DEVICE FOR DUAL TEMPERATURE HEATING OR AIR CONDITIONING BY PRODUCING A TEMPERED AIRSTREAM AND SELECTIVELY A NON-TEMPERED AIRSTREAM**

(71) Applicant: Saly, Jaroslav, 565 01 Chocen (CZ)
(72) Inventor: Saly, Jaroslav, 565 01 Chocen (CZ)
(74) Representative: Musil, Dobroslav

(57) **Abstract**

The invention relates to a device for dual temperature heating and air conditioning, which comprises a casing (1) with at least one air inlet (2) and at least two air outlets (3, 4), whereby at least one heat exchanger (5) is arranged in the inner space of the casing (2) in the way of the air. The air outlets (3, 4) are divided into two groups arranged in the path of the air behind the heat exchanger (5), whereby in the casing (1) is swingingly arranged between two positions a switching flap (6), which in one position blocks the direct path of the air between the air inlet (2) and the other group of outlets (4) outside the heat exchanger (5) and at the same time opens a path for the air stream between the heat exchanger (5) and the second group of outlets (4), whereby in its second position the switching flap (6) opens a direct path for the air stream between the air inlet (2) and the second group of outlets (4) outside the heat exchanger and at the same time blocks the path of the air stream between the heat exchanger (5) and the second group of outlets (4).

## Description

### Technical field

The invention relates to a device for dual temperature heating and air conditioning, which comprises a casing with at least one air inlet and at least two air outlets, whereby at least one heat exchanger is arranged in the inner space of the casing in the way of the air.

### Background art

In order to ensure ventilation in today's buildings, especially in low energy or passive houses, it is common to use ventilation air handling units which provide air circulation in the building. Typically, these ventilation air handling units are provided with a recuperation unit for recovering heat from exhaust air. There are also known devices for indoor ventilation and air heating of buildings.

Given the current design of buildings it is difficult to heat some spaces within one building and keep the other spaces cool. When it is necessary to keep a higher temperature in one part of a building it often happens that other spaces are heated as well, although our requirements for heating these spaces are opposite - see, e.g., a typically desired temperature difference between the main living room in the house (flat) and the bedrrom, where lower temperatures are required and also recommended. This is the main shortcoming of the background art.

The aim of the invention is to eliminate or at least reduce the disadvantages of the background art.

### Principle of the invention

The goal of the invention is achieved by a device for dual temperature heating and air conditioning, whose principle consists in that air outlets are divided into two groups arranged in the path of the air behind a heat exchanger, whereby in a casing is arranged swingingly between two positions a switching flap, which in one position blocks the direct path of the air stream between the air inlet and the second group of outlets outside the heat exchanger and at the same time opens a path of the air stream, whereby in its second position the switching flap opens a direct air path between the air inlet and the second group of outlets outside the heat exchanger and at the same time blocks the air path between the heat exchanger and the second group of the outlets.

By using simple means this solution enables to choose whether to supply air passing through the air exchanger to all the outlets from the casing or whether to supply air passing through the air exchanger to the first group of outlets and to the chosen second group of outlets to supply air which does not pass through the air exchanger, therefore generally cooler air if the air exchanger is arrranged as a heater, or to supply warmer air if the air exchanger is arranged as a cooler.

### Description of drawing

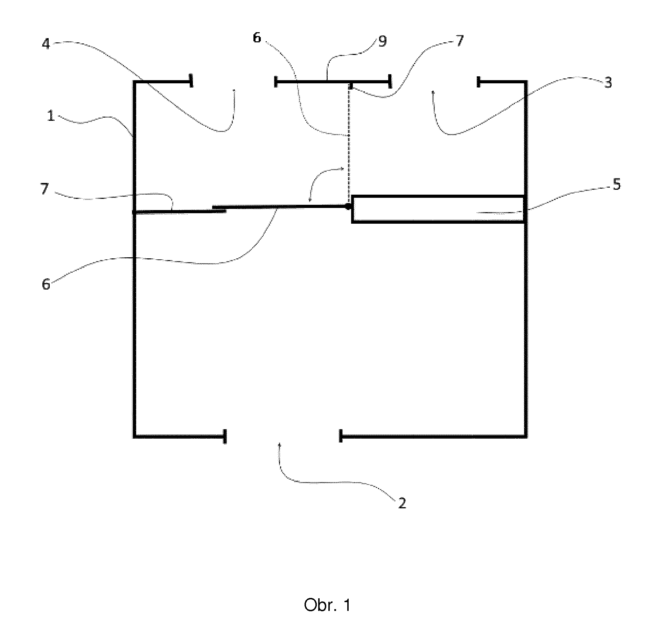

The invention is schematically represented in a plan view in the drawing.

### Specific description

The invention will be described on an example of a simple implementation of a device for dual temperature heating and air conditioning. A common feature of the invention is the fact that the incoming air stream either passes through a casing **1** as one air stream entirely through a heat exchanger and leaves the casing through all air outlets **3**, **4** or, optionally, the air streaming through the casing **1** is by means of a switching flap divided into two air streams, one of which passes through the heat exchanger **5** to the chosen air outlets and the other passes through the casing **1** outside the heat exchanger **5** directly to the remaining air outlets.

The device for dual temperature heating and air-conditioning comprises a casing **1** with at least one air inlet **2** and with at least two air outlets **3**, **4**. In the inner space of the casing **1** in the path of the air is arranged at least one heat exchanger **5** of a heating unit, which ensures the heating and/or cooling of the flowing air, whereby the heat exchanger **5** blocks a part of the clear opening inside the casing **1** for the air flowing from the air inlet **2** towards the air outlets **3**, **4**. The remaining part of the clear opening for the air inside the casing **1** is at least partially overlapped by a switching flap **6**, whereby if the switching flap **6** overlaps only a part of the air clear opening inside the casing **1** outside the heat exchanger **5**, the remaining part of the air clear opening inside the casing **1** is blocked by an auxiliary wall **7**, as is illustrated in the drawing. In the illustrated example of embodiment, the clear opening inside the casing **1** for the air flowing from the air inlet **2** towards the air outlets **3**, **4** is blocked, seen from left to right, by the heat exchanger **5**, the switching flap **6** and the auxiliary wall **7**. In an unillustrated embodiment, the clear opening for the air inside the casing **1** is blocked, seen from left to right, by the heat exchanger **5** and the switching flap **6**. In another unillustrated example of embodiment, the clear opening inside the casing **1** for the air flowing from the air inlet **2** towards the air outlets **3**, **4** is blocked, seen from left to right, by the auxiliary wall **7**, by the switching flap **6** and the heat exchanger **5**, or it is blocked by the switching flap **6** and the heat exchanger **5** or it is blocked by another combination of the switching flap **6**, the heat exchanger **5** and at least one auxiliary wall **7**.

The switching flap **6** is in the casing **1** mounted reversibly swingingly near one of its edges, namely near the edge which is closest to the heat exchanger **5**. The switching flap **6** is, for example, mounted on swivels and is coupled to a drive for its reversible swinging motion, e.g. to a hand lever or to an automated drive connected to a control mechanism, etc.

The assembly consisting of the heat exchanger **5** - the switching flap **6** and, optionally, also of at least one auxiliary wall **7** is located substantially in a row transversely to the clear opening for the air inside the casing **1** in a distance from the rear wall **9** of the casing **1**. The swinging switching flap **6** is reversibly swingingly adjustable between a position crosswise to the clear opening for the air inside the casing **1** and a position towards the rear wall **9** of the casing **1** between the air outlets **3**, **4**.

The switching flap **6** in the position crosswise to the clear opening for the air inside the casing **1** inhibits the passage of the air from the air inlet **1** towards the air outlets **3**, **4** outside the surface of the heat exchanger **5**, and consequently the air can flow only through the heat exchanger **5** and therefore the entire volume of the flowing air passes solely through the heat exchanger **5** and only after that it flows into the air outlets **3**, **4**.

Being in the position towards the rear wall **9** of the casing **1** between the air outlets **3**, **4**, the switching flap **6** opens at least a part of the clear opening for the air inside the casing **1** outside the heat exchanger **5** and closes the space between the rear side of the heat exchanger **5** and the rear wall **9** of the casing **1** between the air outlets **3**, **4**. Thus, in this position of the switching flap **6** a part of the air flows from the inlet **1** directly into one outlet **4** and the other part of the air flows from the inlet **1** through the heat exchanger **5** to the second outlet **3**.

If the distance of the axis **8** of rotation of the swing flap **6** from the rear wall **9** of the casing **1** is greater than the length of the switching flap **6**, an unillustrated auxiliary wall is located on the rear wall **9** of the casing **1**, so that the entire area between the heat exchanger **5** and the rear wall **9** of the casing **1** is divided by the switching flap **6** in a corresponding position.

## Claims

1. A device for dual temperature heating and air conditioning, which comprises a casing with at least one air inlet and at least two air outlets, whereby at least one heat exchanger is arranged in the inner space of the casing in the way of the air, **characterized in that** the air outlets (3, 4) are divided into two groups arranged in the path of the air behind the heat exchanger (5), whereby in the casing (1) is swingingly arranged between two positions a switching flap (6), which in one position blocks the direct path of the air between the air inlet (2) and the second group of outlets (4) outside the heat exchanger (5) and at the same time opens a path for the air stream between the heat exchanger (5) and the second group of outlets (4), whereby in the second position the switching flap (6) opens a direct path for the air stream between the air inlet (2) and the second group of outlets (4) outside the heat exchanger and at the same time blocks the path of the air stream between the heat exchanger (5) and the second group of outlets (4).

2. The device according to Claim 1, **characterized in that** the switching flap (6) is mounted in the casing (1) reversibly swingingly near one of its side edges, which is closest to the heat exchanger (5) and is coupled to a drive for its reversible swinging motion.

3. The device according to Claim 1 or 2, **characterized in that** the heat exchanger (5) and the switching flap (6) are situated crosswise to the air clear opening inside the casing (1) in a distance from the rear wall (9) of the casing (1).
